# EUROPEAN PATENT APPLICATION

(11) **EP 4 425 257 A1**
(43) Date of publication of application: **04.09.2024**
(21) Application number: 22886730.5
(22) Date of filing: 13.10.2022
(51) Int. Cl.: G03B 37/00, G02B 17/08, G03B 11/00, G03B 15/00, G03B 17/02, H04N 23/55, H04N 23/60

(54) **OPTICAL DEVICE AND IMAGING DEVICE**

(30) Priority: 27.10.2021 JP 2021175961; 23.08.2022 JP 2022132755
(71) Applicant: Kyocera Corporation, Kyoto-shi Kyoto 612-8501 (JP)
(72) Inventor: SUGAHARA, Shun, Kyoto-shi, Kyoto 612-8501 (JP); HAYASHI, Yusuke, Kyoto-shi, Kyoto 612-8501 (JP)
(74) Representative: Viering, Jentschura & Partner mbB Patent- und Rechtsanwälte
(86) International application number: PCT/JP2022/038280
(87) International publication number: WO 2023/074401

(57) **Abstract**

An imaging device includes an imaging optical system and an optical element. The imaging element causes incident first light to focus on a specified area. The optical element guides second light to the specified area. As for the second light, the angle between the optical axis of the imaging optical system and the principal ray incident on the imaging optical system differs from that of the first light.

## Description

### CROSS-REFERENCE TO RELATED APPLICATIONS

This application claims the benefit of priority of Japanese Patent Application No. 2021-175961 and Japanese Patent Application No. 2022-132755 filed on October 27, 2021 and August 23, 2022, respectively, the entire contents of which are incorporated herein by reference.

### TECHNICAL FIELD

The present invention relates to an imaging device.

### BACKGROUND OF INVENTION

An imaging optical system configured to form an image of an observation target has various physical characteristics such as focal length and field angle. When the focal length is long, an enlarged image of the observation target is formed, and thus, detailed optical information on a distant observation target, in other words, enlarged optical information can be obtained. The wider the field angle, the wider the range within which optical information can be obtained on observation targets. However, the focal length and the field angle are in a trade-off relationship. The longer the focal length, the narrower the field angle, and the shorter the focal length, the wider the field angle.

Hence, the focal length is adjusted depending on the situation so as to obtain desired optical information. For example, a zoom lens included in an imaging optical system is shifted to adjust the focal length. Alternatively, the focal length is adjusted by switching between multiple single-focus lenses (see Patent Literatures 1 and 2).

### CITATION LIST

### PATENT LITERATURE

Patent Literature 1: Japanese Unexamined Patent Application Publication No. 11-311832
Patent Literature 2: Japanese Unexamined Patent Application Publication No. 2004-279556

### SUMMARY

An optical device according to a first aspect includes:
an optical system configured to cause incident first light to focus on an specified area; and
an optical element configured to guide second light to the specified area, the second light having a principal ray that is incident on the optical system and angle between which and an optical axis of the optical system differs from angle between a principal ray of the first light and the optical axis of the optical system.

An imaging device according to a second aspect includes:
an optical device including an optical system configured to cause incident first light to focus on an specified area and an optical element configured to guide second light to the specified area, the second light having a principal ray that is incident on the optical system and angle between which and an optical axis of the optical system differs from angle between a principal ray of the first light and the optical axis of the optical system; and
an imaging element including a light reception area overlapping the specified area.

### BRIEF DESCRIPTION OF THE DRAWINGS

FIG. 1 is a configuration diagram illustrating a schematic configuration of an imaging device according to a first embodiment.
FIG. 2 is a diagram illustrating an imaging device viewed in a direction perpendicular to the optical axis to present a variation of the optical element in FIG. 1.
FIG. 3 is a diagram illustrating an imaging device viewed in a direction perpendicular to the optical axis to present another variation of the optical element in FIG. 1.
FIG. 4 is a diagram illustrating an imaging device viewed in a direction perpendicular to the optical axis to present still another variation of the optical element in FIG. 1.
FIG. 5 is a diagram illustrating an imaging device viewed in a direction perpendicular to the optical axis to present still another variation of the optical element in FIG. 1.
FIG. 6 is a diagram illustrating an imaging device viewed in a direction perpendicular to the optical axis to present still another variation of the optical element in FIG. 1.
FIG. 7 is a diagram illustrating an imaging device viewed in the normal direction of the light reception area to present still another variation of the optical element in FIG. 1.
FIG. 8 is a diagram illustrating an imaging device viewed in the normal direction of the light reception area to present still another variation of the optical element in FIG. 1.
FIG. 9 is a diagram for explaining physical characteristics of the imaging element and the optical system in FIG. 1.
FIG. 10 is a conceptual diagram for explaining an image reaching the light reception area in FIG. 1.
FIG. 11 is a diagram illustrating an imaging device viewed in the normal direction of the light reception area to present still another variation of the optical element in FIG. 1.
FIG. 12 is a diagram illustrating an imaging device viewed in the normal direction of the light reception area to present still another variation of the optical element in FIG. 1.
FIG. 13 is a diagram illustrating an imaging device viewed in the normal direction of the light reception area to present still another variation of the optical element in FIG. 1.
FIG. 14 is a diagram illustrating an imaging device viewed in the normal direction of the light reception area to present still another variation of the optical element in FIG. 1.
FIG. 15 is a diagram illustrating an imaging device viewed in the normal direction of the light reception area to present still another variation of the optical element in FIG. 1.
FIG. 16 is a diagram illustrating an imaging device viewed in the normal direction of the light reception area to present still another variation of the optical element in FIG. 1.
FIG. 17 is a conceptual diagram for explaining how a superimposed image reaching the light reception area in FIG. 1 is formed.
FIG. 18 is a conceptual diagram for explaining a process of the controller in FIG. 1 generating a restored image from a superimposed image.
FIG. 19 is a flowchart for explaining distance-measurement processing executed by the controller in FIG. 1.
FIG. 20 is a configuration diagram illustrating a schematic configuration of an imaging device according to a second embodiment.
FIG. 21 is a conceptual diagram for explaining image components reaching the light reception area in FIG. 20.
FIG. 22 is a conceptual diagram for explaining image components reaching the light reception area in a variation of FIG. 20.
FIG. 23 is a conceptual diagram for explaining image components reaching the light reception area in another variation of FIG. 20.
FIG. 24 is a configuration diagram illustrating a schematic configuration of an imaging device according to a third embodiment.
FIG. 25 is a configuration diagram for explaining the pixel structure of an imaging element in FIG. 24.

### DESCRIPTION OF EMBODIMENTS

Hereinafter, embodiments of the present disclosure will be described with reference to the drawings. In terms of the constituents in the following drawings, the same constituents are denoted by the same symbols.

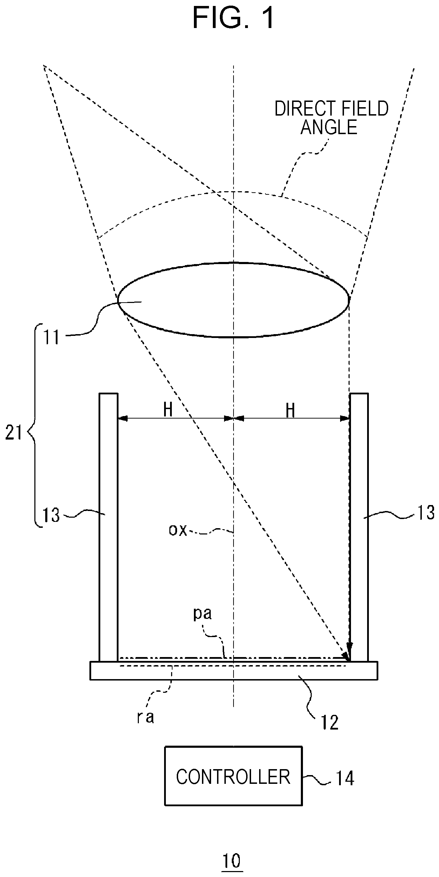

As illustrated in FIG. 1, an imaging device 10 including an optical device 21 according to a first embodiment of the present disclosure includes the optical device 21 and an imaging element 12. The imaging device 10 may further include a controller 14. The optical device 21 includes an imaging optical system (an optical system) 11 and an optical element 13.

The imaging optical system 11 causes incident subject light flux to focus. The imaging optical system 11 causes incident first light to focus on a specified area pa. The first light may be light emitted by an object point located within the field angle of the imaging optical system 11 alone. The specified area pa may be, for example, an imaginary plane or curved surface in three-dimensional space, the center of which intersects the optical axis ox of the imaging optical system 11. Hereinafter, the field angle of the imaging optical system 11 alone, in other words, the field angle of the imaging optical system 11 not including the optical element 13 is referred to as "direct field angle". The imaging optical system 11 includes an optical element that causes light flux emitted from object points at different positions to focus at different image points with the optical element alone, in other words, without the optical element 13. The optical element included in the imaging optical system 11 is, for example, a lens, a mirror, an aperture, or the like.

The imaging optical system 11 need not be object-space telecentric. In other words, the angle of the principal ray of any light flux passing through the imaging optical system 11 relative to the optical axis may be larger than 0°. Alternatively, the imaging optical system 11 may be object-space telecentric.

The optical element 13 guides second light incident on the imaging optical system 11 to the specified area pa. As for the second light, the angle between the optical axis ox of the imaging optical system 11 and the principal ray incident on the imaging optical system 11 differs from that of first light. The second light may be light emitted by an object point located outside the field angle of the imaging optical system 11, in other words, outside the direct field angle. Hence, the angle between the principal ray of second light and the optical axis ox may be larger than the angle between the principal ray of first light and the optical axis ox. The principal ray may be the light beam passing through the center of the aperture stop of the imaging optical system 15, the light beam passing through the center of the entrance pupil of the imaging optical system 15, or the light beam at the center of light flux emitted from any one object point and incident on the imaging optical system 15. The optical element 13 may cause second light passing through the imaging optical system 11 to focus on the specified area pa.

The optical element 13 may be mirrors configured to reflect second light and guide it to the specified area pa. The reflection surface of each mirror may be parallel to the optical axis ox of the imaging optical system 11. Alternatively, a configuration in which the reflection surface of the mirror is not parallel to the optical axis ox is possible.

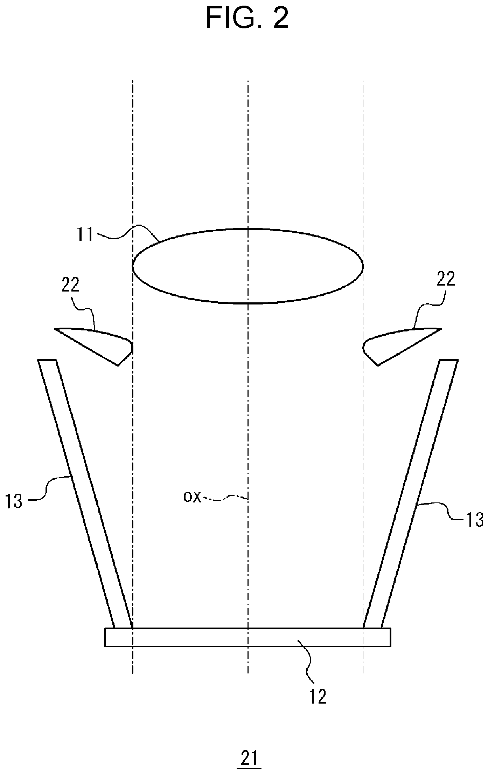

As illustrated in FIG. 2, the reflection surfaces of the mirrors may be inclined relative to the optical axis ox in an orientation of outward inclination in which each mirror faces the imaging optical system 11. In the orientation of the outward inclination, the field angle of the optical device 21 as a whole can be wider than in the configuration in which the reflection surfaces of the mirrors are parallel to the optical axis ox.

In a configuration of the outward inclination, the optical device 21 may have first lenses 22 located between the imaging optical system 11 and the optical element 13, which is mirrors, and configured to adjust the optical path length. The provision of the first lenses 22 can reduce a positional deviation of the in-focus position from the specified area pa, caused by the optical path length longer than in the configuration in which the reflection surfaces of the mirrors are parallel to the optical axis ox. In a configuration in which the mirrors have surfaces parallel to the directions perpendicular to the optical axis ox, such as plane mirrors, the first lenses 22 may be cylindrical lenses. The first lenses 22 may be located, relative to the optical axis ox, outside the line connecting the principal ray of the first light passing through an outer edge of the exit pupil of the imaging optical system 11 to the specified area pa.

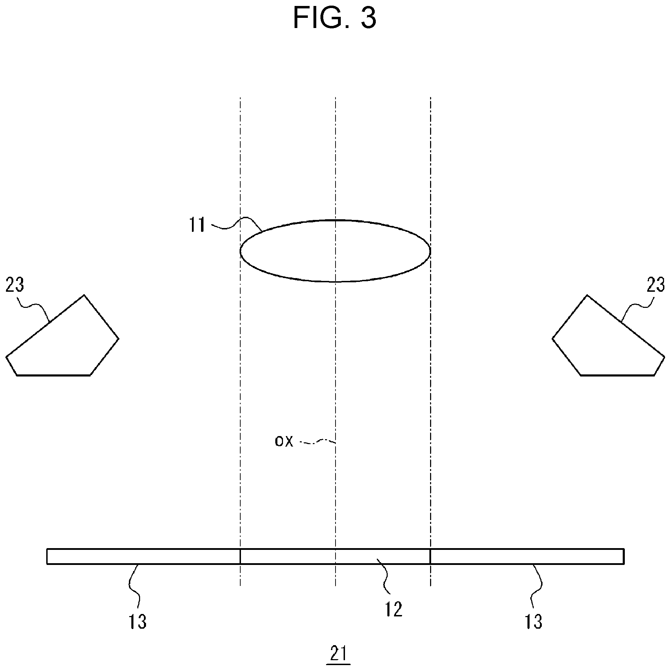

In a configuration of outward inclination, the optical device 21 may have prisms 23, as illustrated in FIG. 3. Second light may be guided to the specified area pa by being reflected on the optical element 13, which is mirrors, and being further reflected by the prisms 23. The provision of the prisms 23 enables an increase in the inclination angle of the mirrors relative to the optical axis ox in a configuration of outward inclination.

In a configuration of outward inclination, the optical element 13, which is mirrors, may be, for example, plane mirrors, curved mirrors, DMDs, and Fresnel mirrors.

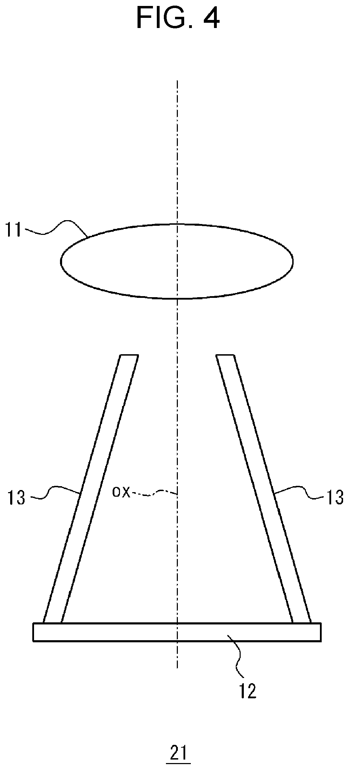

As illustrated in FIG. 4, the reflection surfaces of mirrors may be inclined relative to the optical axis ox in an orientation of inward inclination in which the mirrors face the image formation plane of the imaging optical system 11. In the orientation of inward inclination, the optical device 21 as a whole can be smaller than in the configuration in which the reflection surfaces of the mirrors are parallel to the optical axis ox.

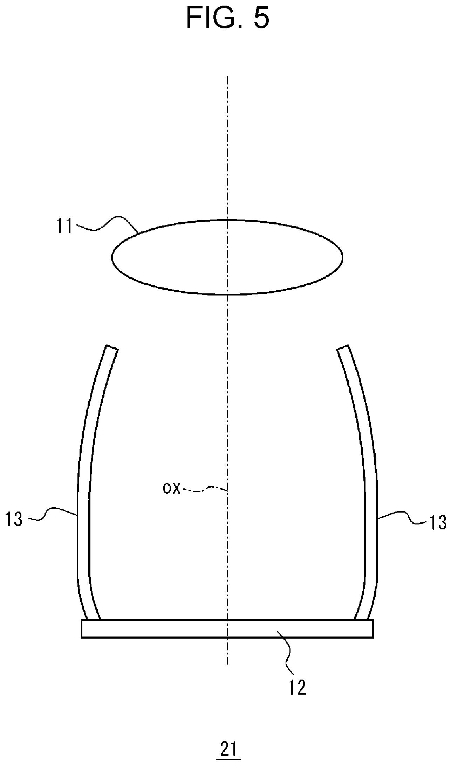

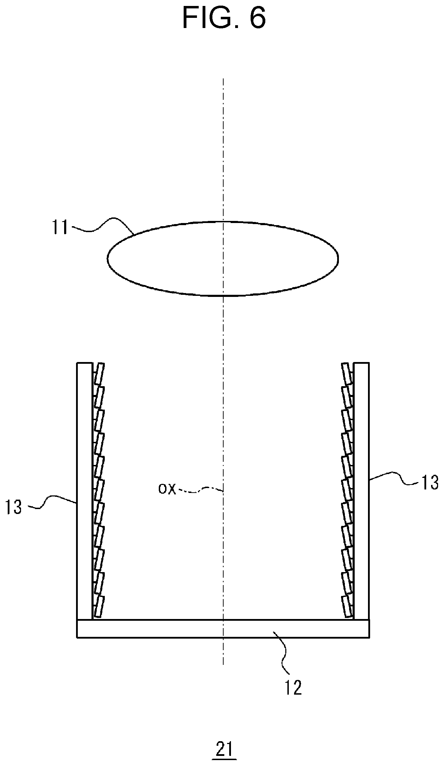

In a configuration of inward inclination, the optical element 13, which is mirrors, may be, for example, plane mirrors, curved mirrors as illustrated in FIG. 5, or DMDs or Fresnel mirrors as illustrated in FIG. 6.

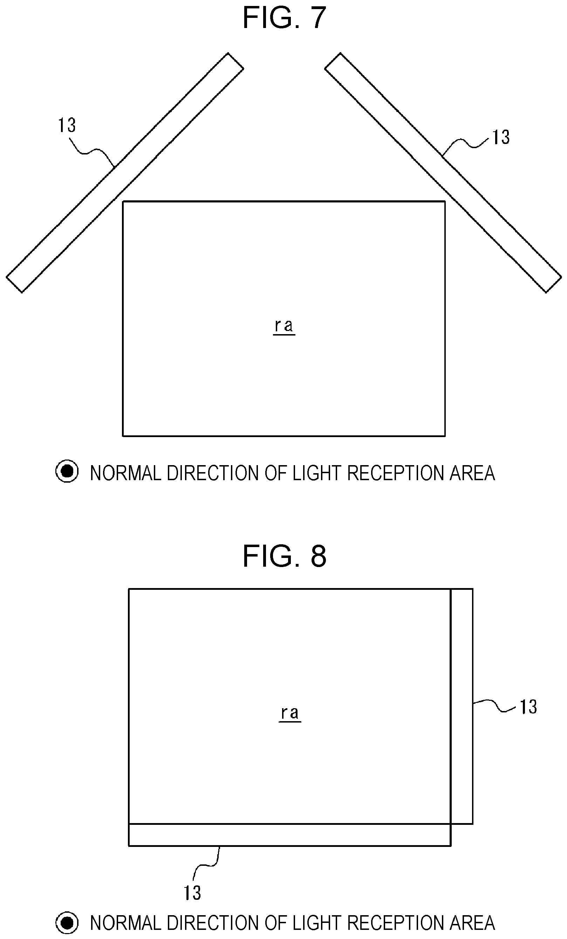

The reflection surface of each mirror may be parallel to one side of a rectangular light reception area ra, described later, of the imaging element 12. Alternatively, as illustrated in FIG. 7, the reflection surfaces of the mirrors may intersect one side of the light reception area ra. The configuration in which the reflection surfaces of the mirrors intersect one side of the light reception area ra can improve the accuracy of separation by an image separation model described later. Note that in the configuration in which the reflection surfaces of the mirrors intersect one side of the light reception area ra, it is preferable that the optical element 13 be located such that the area of the light reception area ra overlapped by the area flanked by the two straight lines extending perpendicularly from both ends of the optical element 13, which is a mirror, is largest as viewed in the normal direction of the light reception area ra.

As viewed in the direction of the optical axis ox of the imaging optical system 11, the mirrors may be located outside the exit pupil of the imaging optical system 11. Further in detail, the mirrors may be located relative to the imaging optical system 11 such that the reflection surfaces are located outside the exit pupil. Alternatively, the mirrors may be located inside the exit pupil as viewed in the direction of the optical axis ox. In particular, in a configuration in which the light reception area ra is smaller than the diameter of the pupil, the mirrors may be located inside the exit pupil.

The mirrors may include a plurality of plane mirrors. The plurality of plane mirrors may include one set of plane mirrors, at least two plane mirrors of which are located such that their reflection surfaces are parallel and face each other. Alternatively, the plurality of plane mirrors may be two plane mirrors and be located such that their reflection surfaces are orthogonal to each other as illustrated in FIG. 8. Two plane mirrors the reflection surfaces of which are orthogonal to each other may be parallel to two sides of a rectangular light reception area ra perpendicular to each other. Each plane mirror may be in close contact with an outer edge of the light reception area ra of the imaging element 12 in the normal direction of the plane mirror. Alternatively, a configuration in which each plane mirror is not in close contact with an outer edge of the light reception area ra in the normal direction of the plane mirror, and in which a gap is present therebetween is possible.

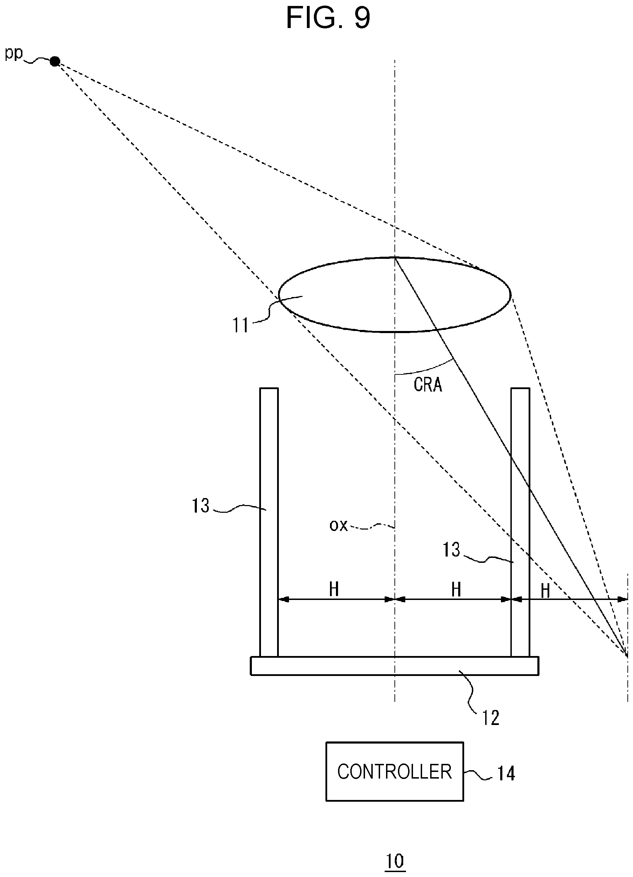

As illustrated in FIG. 9, the distance H between the optical axis ox and each of two plane mirrors the reflection surface of which are parallel to each other may be equal. The two plane mirrors parallel to each other, the imaging optical system 11, and the imaging element 12 may be designed and arranged such that CRA ≤ tan⁻¹(H/B) is satisfied. CRA is the angle between the optical axis ox and the principal ray of light flux in the imaging optical system 11, emitted from an object point pp at an angle of twice the direct field angle. B is the backfocus of the imaging optical system 11.

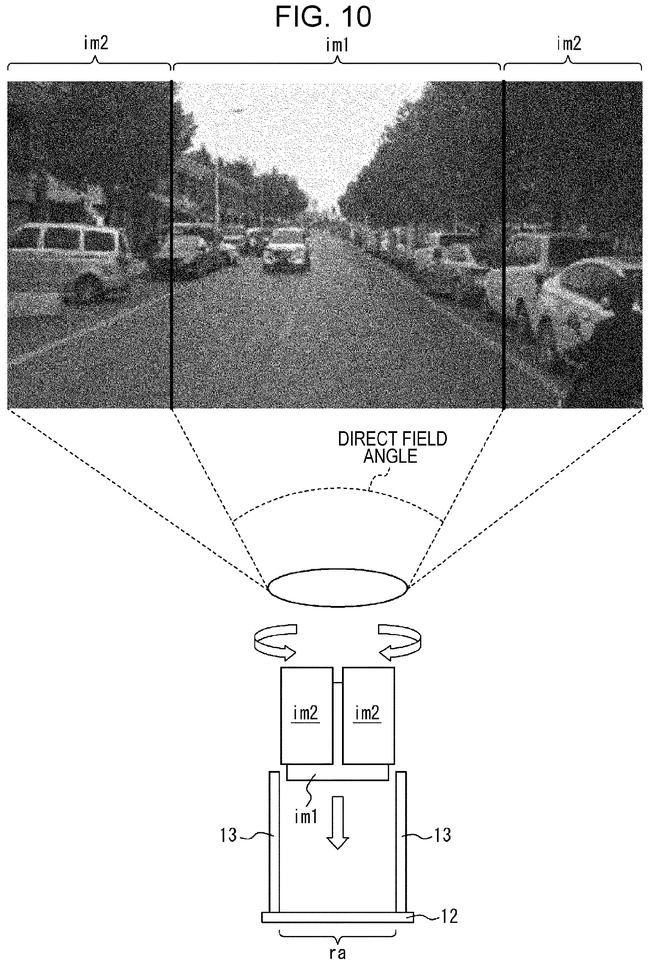

As described later, with the combination of the location of the imaging element 12 and the configurations as described above in the imaging device 10, first image components im1 associated with the object points within the direct field angle, in other words, the object points that emit first light, reach the light reception area ra of the imaging element 12 without intervention of the optical element 13, as illustrated in FIG. 10. More specifically, the first image components im1 associated with the object points within the direct field angle correspond to a subject image located within the direct field angle. Second image components im2 associated with object points outside the direct field angle, in other words, object points that emit second light, reach the light reception area ra in an inverted state via the optical element 13. More specifically, the second image components im2 associated with object points outside the direct field angle correspond to a subject image located outside the direct field angle.

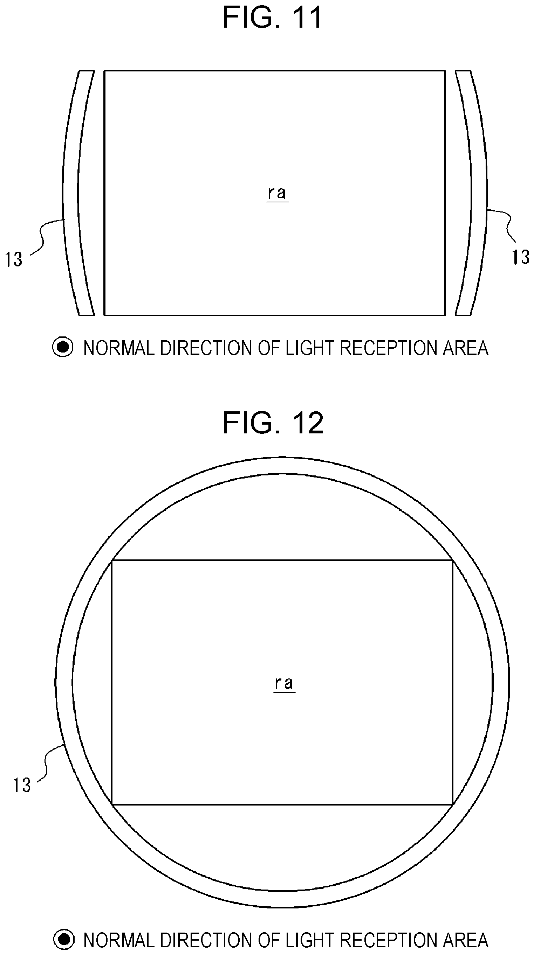

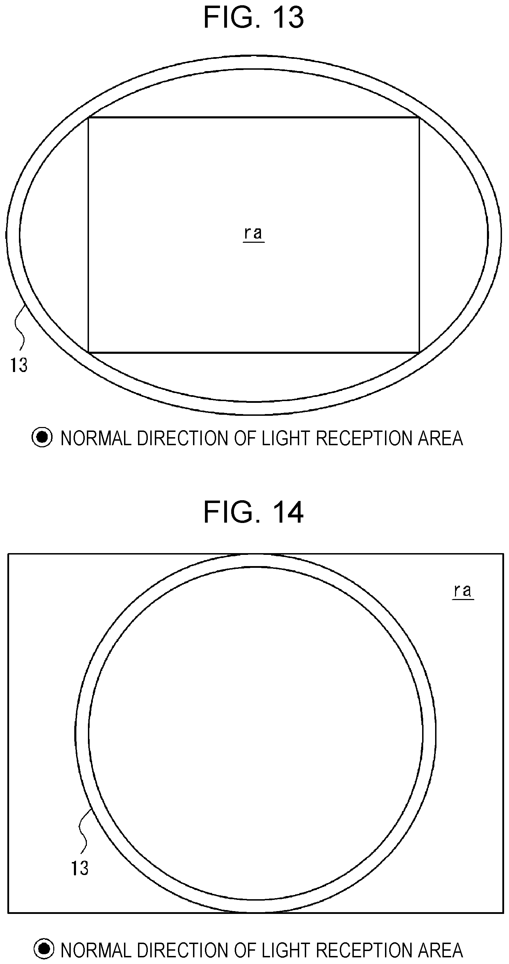

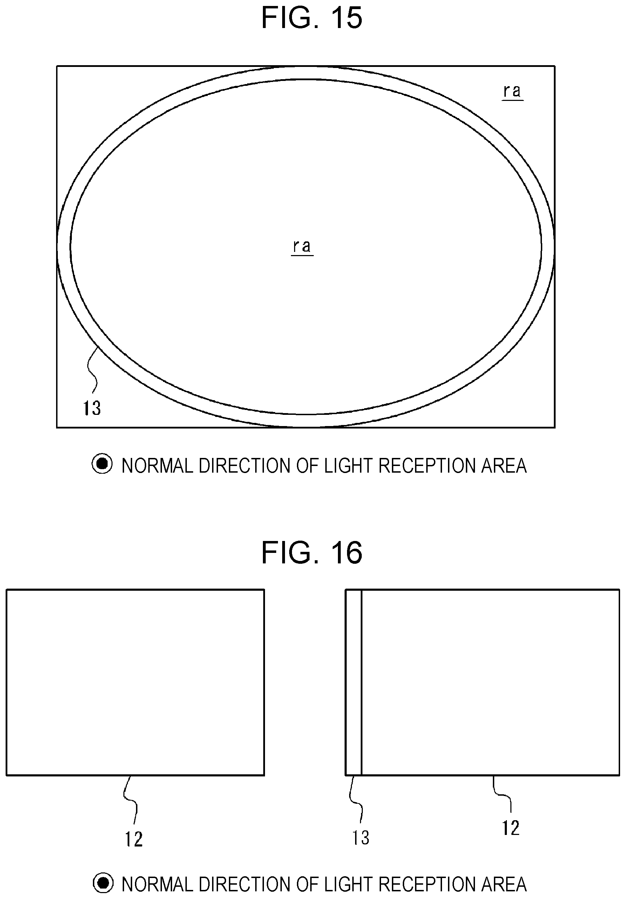

Although the optical element 13 is mirrors including surfaces parallel to the directions perpendicular to the optical axis ox in the above description, the optical element 13 may be mirrors including curved surfaces as viewed from the optical axis ox. For example, as illustrated in FIG. 11, the optical element 13 may be a set of curved mirrors located at a set of opposed sides of a rectangular light reception area ra as viewed in the normal direction of the light reception area ra. The curved mirrors in this configuration may be parallel to the normal direction of the light reception area ra. Alternatively, as illustrated in FIG. 12, the optical element 13 may be a mirror including a circularly curved surface surrounding all of a rectangular light reception area ra, as viewed in the normal direction of the light reception area ra. Alternatively, as illustrated in FIG. 13, The optical element 13 may be a mirror including an elliptically curved surface and surrounding all of a rectangular light reception area ra, as viewed in the normal direction of the light reception area ra. The mirror including an elliptically curved surface is preferable in the configuration in which the light reception area ra has a rectangle shape other than a square. Alternatively, as illustrated in FIG. 14, the optical element 13 may be a mirror that includes circularly curved surface and all of which is located within a rectangular light reception area ra, as viewed in the normal direction of the light reception area ra. Alternatively, as illustrated in FIG. 15, the optical element 13 may be a mirror that includes an elliptically curved surface and all of which is located within a rectangular light reception area ra, as viewed in the normal direction of the light reception area ra. The configuration in which the optical element 13 is a mirror that includes a curved surface and all of which is located within a rectangular light reception area ra enables a gap not to be present between the light reception area ra and the mirror, as viewed in the normal direction of the light reception area ra. Such a configuration enables no gap to be present and thus can improve the continuity of optical information in a superimposed image described later, compared with a configuration with a gap.

The imaging element 12 captures images formed in the light reception area ra. The imaging element 12 may be located such that the light reception area ra overlaps the specified area pa of the optical device 21 in the imaging device 10. Hence, the light reception area ra of the imaging element 12 may match the direct field angle. The direct field angle may be the field angle that matches the range of the object points the images of which are formed in the light reception area ra without intervention of the optical element 13. At least part of the light flux of first light incident on the imaging optical system 11 from within the direct field angle of the imaging optical system 11 may be focused on the light reception area ra. In addition, at least part of the light flux of second light that is incident on the imaging optical system 11 from outside the direct field angle of the imaging optical system 11 and passes through the optical element 13 may be focused on the light reception area ra.

The imaging element 12 may be capable of capturing images of visible light and invisible light such as infrared rays and ultraviolet rays. The imaging element 12 is, for example, a charge coupled device (CCD) image sensor, a complementary metal-oxide-semiconductor (CMOS) image sensor, or the like. The imaging element 12 may be a color image sensor. In other words, a plurality of pixels arranged in the light reception area ra of the imaging element 12 may be covered with, for example, RGB color filters so as to be distributed uniformly in the light reception area ra. The imaging element 12 generates an image signal corresponding to an image received by image capturing. The imaging element 12 may generate image signals at a specified frame rate such as 30 fps.

In the imaging element 12, the outer edge of the light reception area ra on the side where the optical element 13 is located may be located outside the outer edge of the exit pupil of the imaging optical system 11. The expression "outside the outer edge of the exit pupil" denotes "outside with reference to the optical axis ox of the imaging optical system 11". As described earlier, the light reception area ra may be rectangular.

The imaging device 10 may include a plurality of imaging elements 12. In a configuration with a plurality of imaging elements 12, an optical element 13 may be located between two imaging elements 12 adjacent to each other, as illustrated in FIG. 16. The provision of the optical element 13 between the two imaging elements 12 adjacent to each other enables subject light flux that would be focused in the gap between the light reception areas ra of the two adjacent imaging elements 12 in a configuration without the optical element 13 to be focused on at least one of the imaging elements 12.

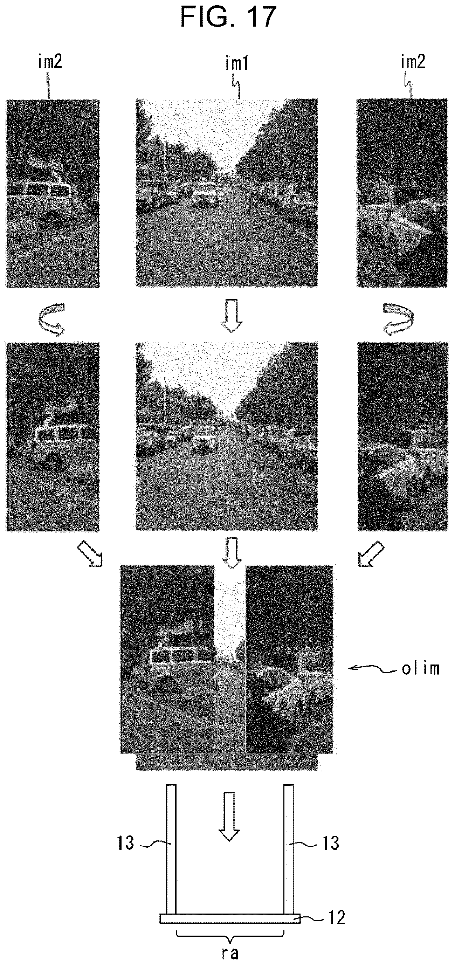

With the configurations described above, as illustrated in FIG. 17, first image components im1 and second image components im2 which are inverted in a configuration in which the optical element 13 is a mirror or mirrors are superimposed in the light reception area ra. Thus, the imaging element 12 captures a superimposed image olim including the first image components im1 and the second image components im2 inverted in a configuration in which the optical element 13 is a mirror or mirrors.

The controller 14 includes at least one processor, at least one dedicated circuit, or a combination of these. The processor is a general purpose processor such as a central processing unit (CPU) or a graphics processing unit (GPU) or a dedicated processor specialized for a specific process. The dedicated circuit may be, for example, a field-programmable gate array (FPGA), an application specific integrated circuit (ASIC), or the like. The controller 14 may perform image processing on the image signals obtained from the imaging element 12.

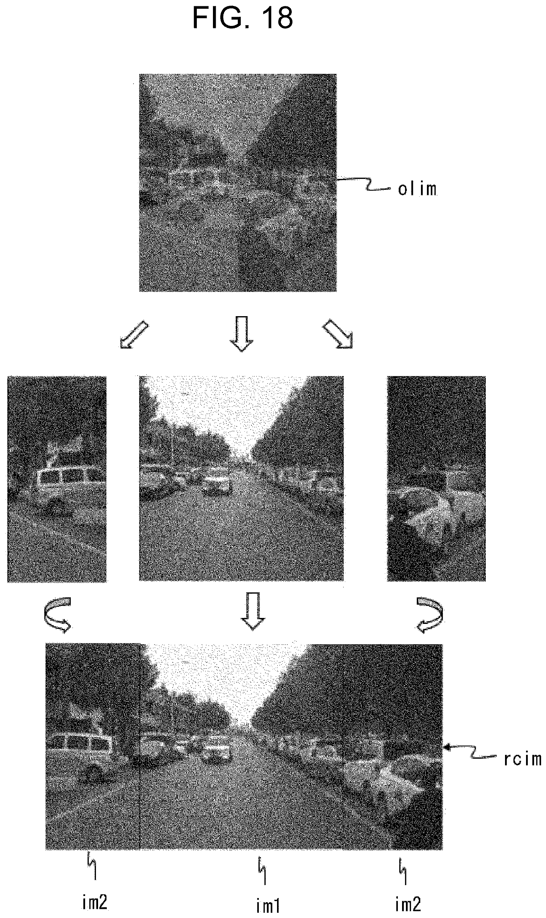

As illustrated in FIG. 18, the controller 14 may perform image processing to separate the superimposed image olim corresponding to an image signal into first image components im1 and second image components im2. The controller 14 applies, for example, an image processing method such as an independent component analysis, a wavelet method, or an image separation model to separate the superimposed image olim. The image separation model is, for example, a model built in advance by creating superimposed images on which multiple images are superimposed and causing the model to learn that the multiple images are the correct answer for each superimposed image. The image separation model may be a model employing pix-to-pix that causes a generator configured to generate images as with an encoder-decoder model and a discriminator configured to determine whether a generated image is a false image to compete against each other and that generates paired images reflecting the relationship. The controller 14 may combine separated first image components im1 and second image components im2 to generate a restored image rcim.

The controller 14 may use the restored image rcim to measure the distance to a subject captured around the imaging device 10. The controller 14 uses the restored image rcim to perform distance measurement, for example, in accordance with depth-from-defocus (DFD). The controller 14 may perform distance measurement by using the restored image rcim in accordance with a motion parallax method (SLAM: simultaneous localization and mapping, motion stereo), a separation model based on deep learning, a foot-distance measurement method, or the like. In the foot-distance measurement method, three-dimensional coordinates are calculated by using the coordinates of images on the assumption that the lower end of a subject image is located on the ground surface.

The controller 14 may generate a distance image by using the distance corresponding to each address in the restored image rcim. In a distance image, the pixel value of each pixel corresponds to the distance. The controller 14 may send the distance image to external equipment.

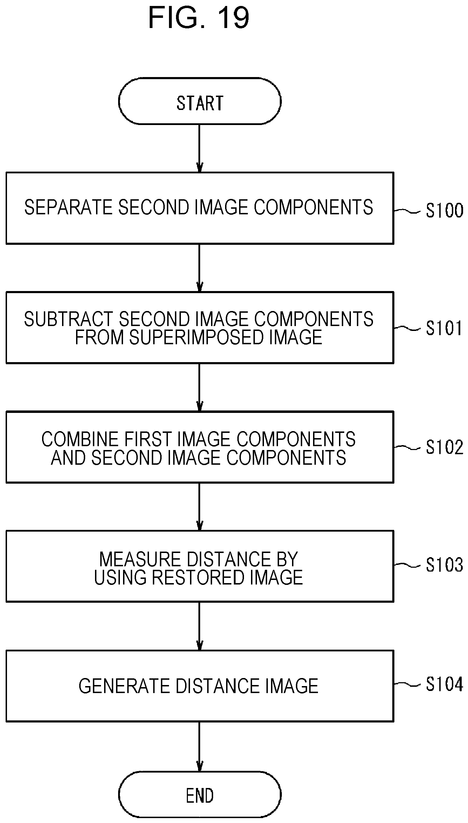

The following describes distance-measurement processing executed by the controller 14 in the present embodiment with reference to the flowchart in of FIG. 19. The distance-measurement processing is started every time the controller 14 obtains an image signal from the imaging element 12.

In step S100, the controller 14 separates second image components im2 from the superimposed image olim corresponding to an obtaining image signal. After the separation, the process proceeds to step S101.

In step S101, the controller 14 subtracts the second image components im2 separated in step S100 from the superimposed image olim to generate the first image components im1. After generating the first image components im1, the process proceeds to step S102.

In step S102, the controller 14 combines the second image components im2 separated in step S101 with the first image components im1 generated in step S101 to generate a restored image rcim. After generating the restored image rcim, the process proceeds to step S103.

In step S103, the controller 14 uses the restored image rcim generated in step S102 to measure the distance of each subject captured in the restored image rcim. After the distance measurement, the process proceeds to step S104.

In step S104, the controller 14 generates a distance image in accordance with each distance calculated in step S103 and the position corresponding the distance in the restored image rcim. The controller 14 sends the distance image to external equipment. After generating the distance image, the distance-measurement processing ends.

The optical device 21 of the first embodiment with the configuration as described above includes the imaging optical system 11 configured to cause incident first light to focus on the specified area pa and the optical element 13 configured to guide second light to the specified area pa, the second light having a principal ray incident on the imaging optical system 11 the angle between which and the optical axis ox of the imaging optical system 11 differs from that of the first light. Although the optical device 21 with such a configuration employs the imaging optical system 11 with a relatively long focal length, the optical device 21 is capable of guiding, to the specified area ra, an image containing optical information in an angle range wider than the field angle corresponding to the focal length. Thus, the optical device 21 is capable of generating enlarged optical information in a wide range.

In the imaging device 10 of the first embodiment, the optical element 13 is a mirror or mirrors configured to reflect the second light and guide it to the specified area pa, and the reflection surface of each mirror is parallel to the optical axis ox and one side of the rectangular light reception area ra of the imaging element 12. In the imaging device 10 with this configuration, the number of directions in which the image having reached the light reception area ra via the mirror(s) is distorted is smaller than or equal to one. Thus, since the load of image processing to remove distortion in the light components reflected by the mirror(s) and included in the captured image can be low in the imaging device 10, the imaging device 10 can provide an improved reproducibility of the reflected light components.

In the imaging device 10 of the first embodiment, the mirror(s) include(s) a plurality of plane mirrors, and at least one set of two plane mirrors out of the plurality of plane mirrors is located such that the reflection surfaces of the two plane mirrors are parallel to each other. This configuration enables the imaging device 10 to obtain optical information wider than the direct field angle on both sides with reference to the optical axis ox as the center.

In the imaging device 10 of the first embodiment, the distance H between the optical axis ox and each of the reflection surfaces of the two plane mirrors parallel to each other is equal, and the angle CRA of the principal ray of the light flux from an object point pp at an angle of twice the direct field angle satisfies CRA ≤ tan⁻¹(H/B). The imaging device 10 with this configuration can avoid such a situation that the reflected light components from one plane mirror and the reflected light components from the other plane mirror are superimposed and thus the image components of the three layers are superimposed, and this can improve the accuracy of separating image components in the succeeding image processing.

In the imaging device 10 of the first embodiment, each plane mirror is in close contact with an outer edge of the light reception area ra of the imaging element 12 in the normal direction of the plane mirror. In the normal direction, if a gap is present between the plane mirror and the light reception area ra of the imaging element 12, the optical information of the subject focused in this gap would be lost. Considering such a situation, the imaging device 10 having the aforementioned configuration can avoid loss of optical information.

In the imaging device 10 of the first embodiment, each mirror is located outside the exit pupil of the imaging optical system 11 as viewed in the direction of the optical axis ox. With this configuration, the imaging device 10 is capable of causing light flux passing near end portions of the exit pupil to be incident on the mirror. Thus, the imaging device 10 is capable of reducing a decrease in the amount of light due to mechanical vignetting of part of the light flux passing near the exit pupil.

In the imaging device 10 of the first embodiment, the angle of the principal ray of any light flux in the imaging optical system 11 relative to the optical axis ox is larger than 0°. Since the imaging optical system 11 is not object-space telecentric in the imaging device 10 with this configuration, light flux from object points at angles wider than the direct field angle can be incident on the optical element 13. Thus, the imaging device 10 is capable of reliably generating optical information in a range wider than the direct field angle.

The imaging device 10 of the first embodiment includes the controller 14 configured to separate an image corresponding to an image signal into first image components im1 associated with the object points within the direct image and second image components im2 associated with object points outside the direct field angle. With this configuration, the imaging device 10 is capable of generating an image obtained by canceling the superimposition of a superimposed image olim on which multiple kinds of image components are superimposed.

An imaging device according to a second embodiment of the present disclosure will be described. The second embodiment differs from the first embodiment in the configuration of the optical element and the separation processing performed by the controller. The second embodiment will be described below with a focus on differences from the first embodiment. Note that the portions having the same configurations as in the first embodiment are denoted by the same symbols.

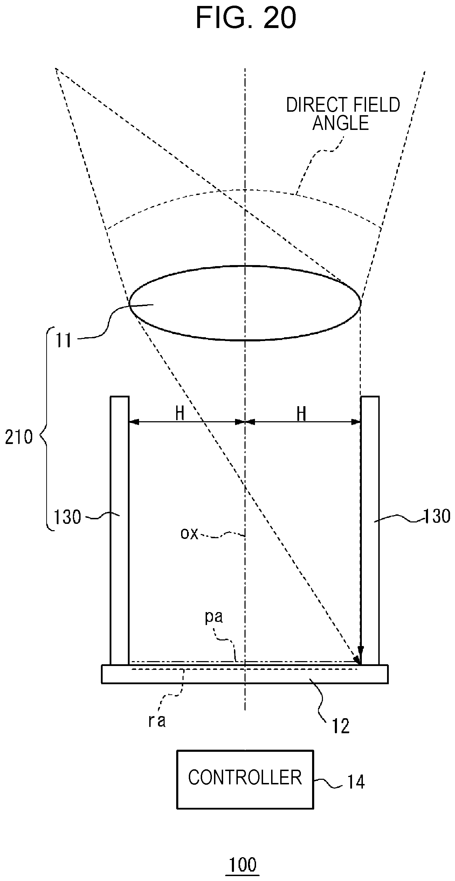

As illustrated in FIG. 20, an imaging device 100 according to the second embodiment includes an imaging optical system 11, an imaging element 12, and an optical element 130, similarly to the first embodiment. The imaging device 100 may further include a controller 14. The structures and functions of the imaging optical system 11 and the imaging element 12 in the second embodiment are the same as those in the first embodiment. The structure of the controller 14 in the second embodiment is the same as that in the first embodiment.

Similarly to the first embodiment, the optical element 130 in the second embodiment causes at least part of the light flux incident on the imaging optical system 11 from outside the direct field angle of the imaging optical system 11 to focus on the light reception area ra of the imaging element 12. Unlike the first embodiment, the optical element 130 in the second embodiment performs optical processing on the incident light flux and emit the resultant light flux.

The optical processing is, for example, changing the bandwidth of the incident light flux. Specifically, the optical element 130 attenuates, out of the incident light flux, the light in the bandwidth corresponding to one of the color filters out of a plurality of color filters covering the imaging element 12. Thus, the optical element 130 causes the light in the bandwidth excluding the light in the attenuated bandwidth to focus on the light reception area ra.

The optical element 130 may be mirrors configured to reflect light in a bandwidth different from the bandwidth of the color to be attenuated. The optical element 130, for example, attenuates R light and reflects GB light.

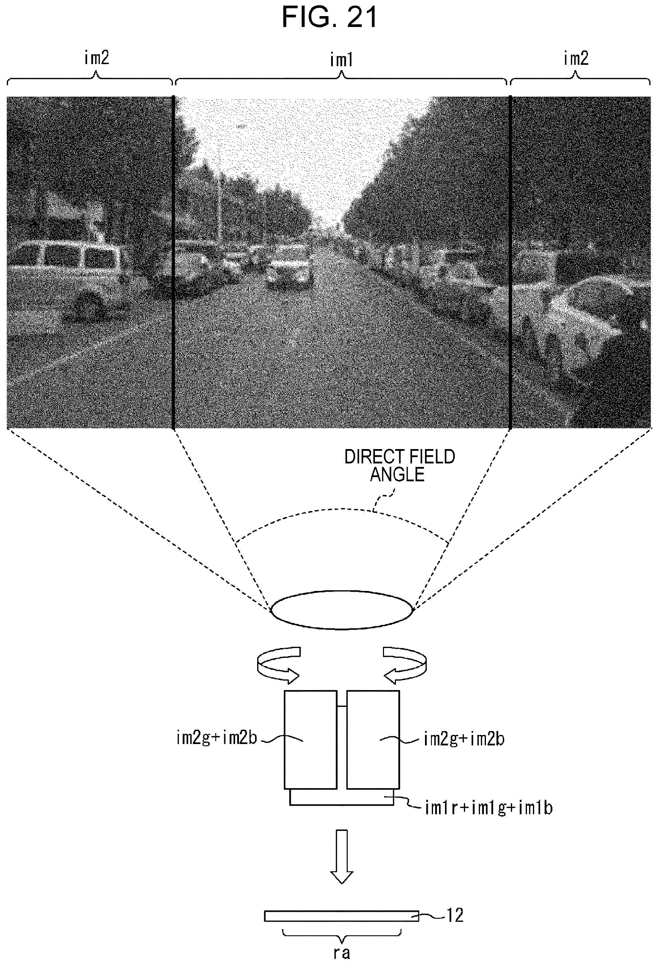

In the second embodiment with the configuration described above, as illustrated in FIG. 21, first R image components im1r, first G image components im1g, and first B image components im1b associated with the object points within the direct field angle and corresponding to the colors of all the color filters reach the light reception area ra without intervention of the optical element 130. Second G image components im2g and second B image components im2b associated with object points outside the direct field angle and corresponding to the colors other than the attenuated color component reach the light reception area ra via the optical element 130.

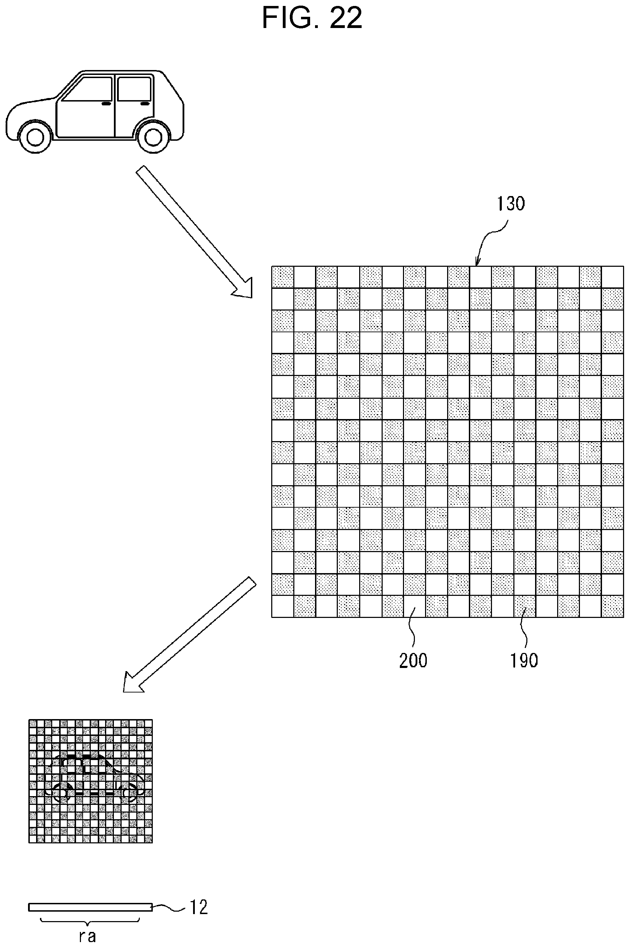

Alternatively, the optical processing is, for example, adding a brightness difference pattern according to the incident positions of incident light flux. Specifically, as illustrated in FIG. 22, the optical element 130 has a surface on which first areas 190 and second areas 200 are distributed, for example, in a checkered pattern. The first areas 190 attenuate the luminance of incident light at a first attenuation ratio and emit the resultant light. The first attenuation ratio is more than 0% and less than 100%. The second areas 200 attenuate the luminance of incident light at a second attenuation ratio and emit the resultant light. The second attenuation ratio is 0% or more and less than the first attenuation ratio. Thus, the optical element 130 adds the brightness difference according to the pattern of the first areas 190 and the second areas 200 to incident light flux and causes the resultant light to focus on the light reception area ra.

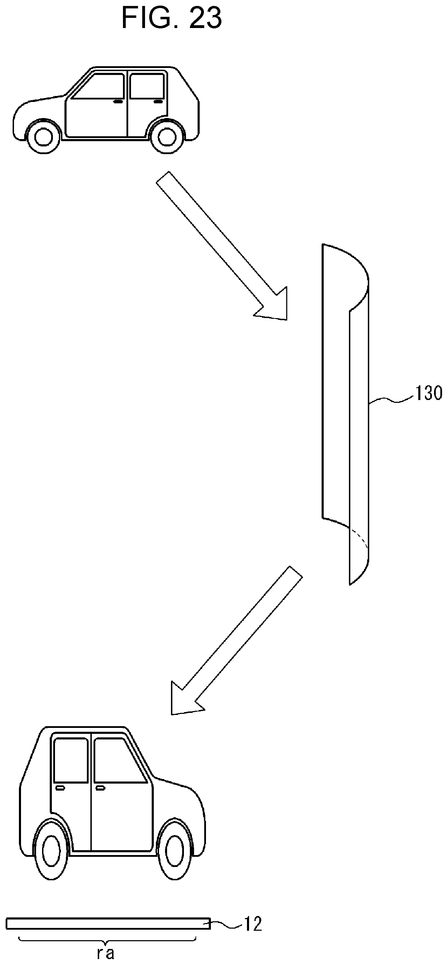

Alternatively, the optical processing is, for example, adding distortion to the image to be formed by the incident light flux in the light reception area ra. Specifically, as illustrated in FIG. 23, the optical element 130, which is a mirror including a cylindrically curved surface the axis of which is parallel to the optical axis, reflects the incident light flux and forms an image, to which distortion is added, in the light reception area ra. More specifically, the optical element 130 forms an image distorted so as to be enlarged in the direction of the line connecting both ends of the circular arc of the cross section of the optical element which is a mirror including a plane perpendicular to the optical axis.

Similarly to the first embodiment, the controller 14 in the second embodiment may perform image processing to separate the superimposed image olim corresponding to an image signal into first image components im1 and second image components im2. In the second embodiment, the controller 14 separates the superimposed image olim by an image processing method using an image separation model.

The image separation model in in the second embodiment will be described below. The image separation model is a model built in advance by generating a first image not subjected to optical processing; performing image processing, corresponding to the optical processing performed by the optical element 130, on a second image different from the first image; superimposing the resultant second image on the first image to generate a superimposed image; and causing the model to learn that the first image and the second image are the correct answer to the superimposed image.

In a configuration in which the optical processing is changing the bandwidth, the first image is RGB image components of a certain image. In this configuration, the second image is GB image components of an image different from the certain image. In a configuration in which the optical processing is changing the bandwidth, R image components of the certain image may be added to the superimposed image and used for the training.

In a configuration in which the optical processing is adding a brightness difference pattern, the first image is a certain image. In this configuration, the second image is obtained by changing the luminance of an image different from the certain image with the brightness difference pattern of the optical element 130.

In a configuration in which the optical processing is adding distortion, the first image is a certain image. In this configuration, the second image is obtained by causing an image different from the certain image to be reflected on a mirror including the same curved surface as that of the optical element 130.

In the second embodiment, the controller 14 may combine separated first image components im1 and second image components im2 to generate a restored image rcim, as in the first embodiment. In the second embodiment, the controller 14 may use the restored image rcim to measure the distance of a subject captured around the imaging device 100, as in the first embodiment. In the second embodiment, the controller 14 may generate a distance image in accordance with the distance corresponding to each address in the restored image rcim and send it to external equipment, as in the first embodiment.

An optical device 210 of the second embodiment with the configuration as described above also includes the imaging optical system 11 configured to cause incident first light to focus on the specified area pa and the optical element 130 configured to guide second light to the specified area pa, the second light having a principal ray incident on the imaging optical system 11 the angle between which and the optical axis ox of the imaging optical system 11 differs from that of the first light. Hence, also the imaging device 100 is capable of generating enlarged optical information in a wide range.

Also in the imaging device 100 of the second embodiment, the optical element 130 is a mirror or mirrors configured to reflect the second light and cause it to focus on the specified area pa, and the reflection surface of each mirror is parallel to the optical axis ox and one side of the rectangular light reception area ra of the imaging element 12. Thus, since the load of image processing to remove distortion in light components reflected by the mirror(s) and included in the captured image can be low also in the imaging device 100, the imaging device 100 can provide an improved reproducibility of the reflected light components.

Also in the imaging device 100 of the second embodiment, the mirror includes a plurality of plane mirrors, and at least one set of two plane mirrors out of the plurality of plane mirrors is located such that their reflection surfaces are parallel to each other. Hence, also the imaging device 100 is capable of obtaining optical information wider than the direct field angle on both sides with reference to the optical axis ox as the center.

Also in the imaging device 100 of the second embodiment, the distance H between the optical axis ox and each of the reflection surfaces of the two plane mirrors parallel to each other is equal, and the angle CRA of the principal ray of the light flux from an object point pp at an angle of twice the direct field angle satisfies CRA ≤ tan⁻¹(H/B). Hence, also the imaging device 100 can avoid such a situation that the reflected light components from one plane mirror and the reflected light components from the other plane mirror are superimposed, and thus the image components of the three layers are superimposed, and this can improve the accuracy of separating image components in the succeeding image processing.

Also in the imaging device 100 of the second embodiment, each plane mirror is in close contact with an outer edge of the light reception area ra of the imaging element 12 in the normal direction of the plane mirror. Thus, also the imaging device 100 can avoid loss of optical information.

Also in the imaging device 100 of the second embodiment, each mirror is located outside the exit pupil of the imaging optical system 11 as viewed in the direction of the optical axis ox. Thus, also the imaging device 100 is capable of reducing a decrease in the amount of light due to mechanical vignetting of part of the light flux passing near the exit pupil.

Also in the imaging device 100 of the second embodiment, the angle of the principal ray of any light flux in the imaging optical system 11 relative to the optical axis ox is larger than 0°. Thus, also the imaging device 100 is capable of reliably generating optical information in a range wider than the direct field angle.

Also the imaging device 100 of the second embodiment includes the controller 14 configured to separate an image corresponding to an image signal into first image components im1 associated with the object points within the direct image and second image components im2 associated with object points outside the direct field angle. Thus, also the imaging device 100 is capable of generating an image obtained by canceling the superimposition of a superimposed image olim on which multiple kinds of image components are superimposed.

In the imaging device 100 of the second embodiment, the optical element 130 performs optical processing on the light flux incident on the optical element 130 and emits the resultant light flux. In the imaging device 100 with this configuration, the optical characteristics corresponding to the optical processing are added to the image components to be separated. Hence, an image separation model trained so as to improve the separation accuracy can be built for the imaging device 100. Thus, the imaging device 100 can improve the restoration accuracy for restored images.

An imaging device according to a third embodiment of the present disclosure will be described. The third embodiment differs from the first embodiment in the configuration of the imaging element and the separation processing performed by the controller. The third embodiment will be described below with a focus on differences from the first embodiment. Note that the portions having the same configurations as in the first embodiment are denoted by the same symbols.

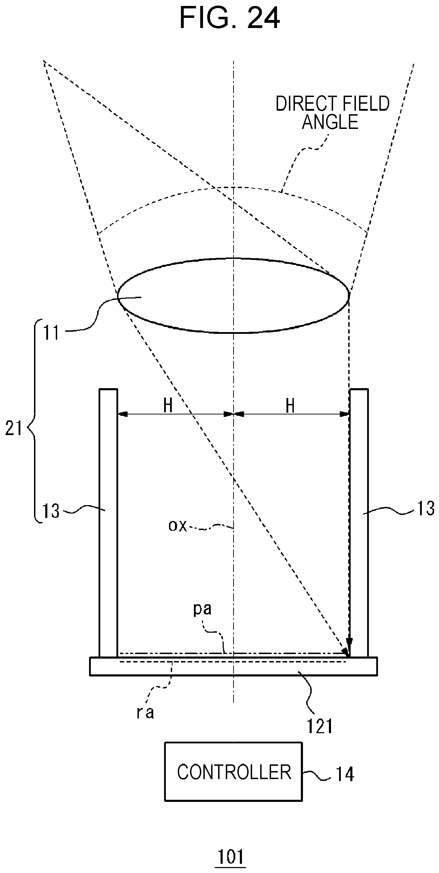

As illustrated in FIG. 24, an imaging device 101 according to the third embodiment includes an imaging optical system 11, an imaging element 121, and an optical element 13, similarly to the first embodiment. The imaging device 101 may further include a controller 14. The structures and functions of the imaging optical system 11 and the optical element 13 in the third embodiment are the same as those in the first embodiment. The structure of the controller 14 in the third embodiment is the same as that in the first embodiment.

Similarly to the first embodiment, the imaging element 121 in the third embodiment captures images formed in the light reception area ra via the imaging optical system 11. Similarly to the first embodiment, the imaging element 121 may be capable of capturing images of visible light and invisible light such as infrared rays and ultraviolet rays. The imaging element 121 may be a color image sensor. Similarly to the first embodiment, the imaging element 121 generates an image signal corresponding to an image received by image capturing. Similarly to the first embodiment, the imaging element 121 may generate image signals at a specified frame rate such as 30 fps. In the imaging element 121, as in the first embodiment, the outer edge of the light reception area ra on the side where the optical element 13 is located may be located outside the outer edge of the exit pupil of the imaging optical system 11. The light reception area ra may be rectangular, as in the first embodiment.

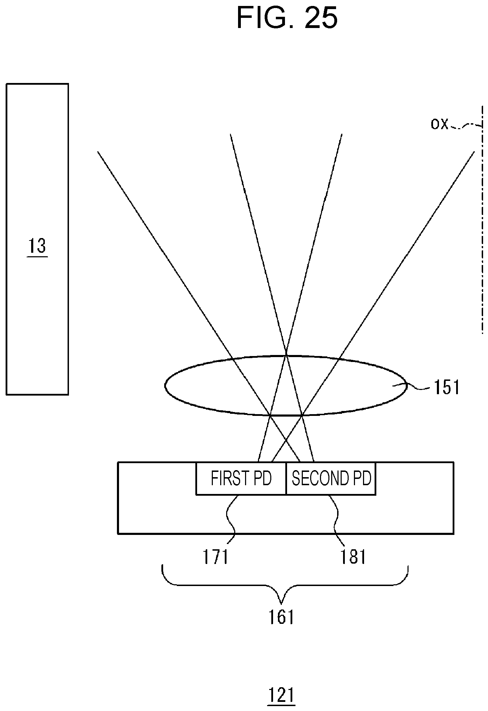

In the third embodiment, unlike the first embodiment, the imaging element 121 may be a dual pixel image sensor. As illustrated in FIG. 25, the imaging element 121, which is a dual pixel image sensor, has a structure in which a pixel 161 covered with each micro lens 151 has a first PD (photodiode) 171 and a second PD 181, and light flux can be incident on only one of the PDs depending on the incident direction of light flux. For example, in each pixel 161, only the light flux from the direction inclined to the optical axis ox can be incident on the first PD 171, and only the light flux from the direction inclined to the optical element 13 can be incident on the second PD 181.

With the configuration described above, the first image components im1 associated with the object points within the direct image reach the first PDs 171 in the light reception area ra without intervention of the optical element 13. The second image components im2 associated with object points outside the direct field angle reach the second PDs 181 in the light reception area ra in an inverted state via the optical element 13.

Similarly to the first embodiment, the controller 14 in the third embodiment may perform image processing to separate the superimposed image olim corresponding to an image signal into first image components im1 and second image components im2. In the third embodiment, the controller 14 may generate first image components im1 by using only the signals generated by the first PDs 171. The expression "by using only the signals generated by the first PDs 171" explains that the signals generated by the second PDs 181 are not used. For example, signals not related to the signals output by the second PDs 181 may be used, for example, the synchronization signal and the like. In the third embodiment, the controller 14 may generate inverted second image components im2 by using only the signals generated by the second PDs 181. The expression "by using only the signals generated by the second PDs 181" has a meaning similar to the expression "by using only the signals generated by the first PD 171".

In the third embodiment, the controller 14 may combine the separated first image components im1 and second image components im2 to generate a restored image rcim, as in the first embodiment. In the third embodiment, the controller 14 may use the restored image rcim to measure the distance of a subject captured around the imaging device 101, as in the first embodiment. In the third embodiment, the controller 14 may generate a distance image in accordance with the distance corresponding to each address in the restored image rcim and send it to external equipment, as in the first embodiment.

Also in the imaging device 101 with the configuration as described above according to the third embodiment, the optical element 13 is a mirror or mirrors configured to reflect the second light and guide it to the specified area pa, and the reflection surface of each mirror is parallel to the optical axis ox and one side of the rectangular light reception area ra of the imaging element 121. Thus, since the load of image processing to remove distortion in light components reflected by the mirror(s) and included in the captured image can be low also in the imaging device 101, the imaging device 101 can provide an improved reproducibility of the reflected light components.

Also in the imaging device 101 of the third embodiment, the mirror includes a plurality of plane mirrors, and at least one set of two plane mirrors out of the plurality of plane mirrors is located such that their reflection surfaces are parallel to each other. Hence, also the imaging device 101 is capable of obtaining optical information wider than the direct field angle on both sides with reference to the optical axis ox as the center.

Also in the imaging device 101 of the third embodiment, the distance H between the optical axis ox and each of the reflection surfaces of the two plane mirrors parallel to each other is equal, and the angle CRA of the principal ray of the light flux from an object point pp at an angle of twice the direct field angle satisfies CRA ≤ tan⁻¹(H/B). Hence, also the imaging device 101 can avoid such a situation that the reflected light components from one plane mirror and the reflected light components from the other plane mirror are superimposed, and thus the image components of the three layers are superimposed, and this can improve the accuracy of separating image components in the succeeding image processing.

Also in the imaging device 101 of the third embodiment, each plane mirror is in close contact with an outer edge of the light reception area ra of the imaging element 121 in the normal direction of the plane mirror. Thus, also the imaging device 101 can avoid loss of optical information.

Also in the imaging device 101 of the third embodiment, each mirror is located outside the exit pupil of the imaging optical system 11 as viewed in the direction of the optical axis ox. Thus, also the imaging device 101 is capable of reducing a decrease in the amount of light due to mechanical vignetting of part of the light flux passing near the exit pupil.

Also in the imaging device 101 of the third embodiment, the angle of the principal ray of any light flux in the imaging optical system 11 relative to the optical axis ox is larger than 0°. Thus, also the imaging device 101 is capable of reliably generating optical information in a range wider than the direct field angle.

Also the imaging device 101 of the third embodiment includes the controller 14 configured to separate an image corresponding to an image signal into first image components im1 associated with the object points within the direct image and second image components im2 associated with object points outside the direct field angle. Thus, also the imaging device 101 is capable of generating an image obtained by canceling the superimposition of a superimposed image olim on which multiple kinds of image components are superimposed.

### EXAMPLES

As a dataset of images for training, driving space images were prepared. Using each image in the dataset, part of each whole image was cut out, and one partial image was superimposed on the other partial image. Sets of superimposed images were thus created. An image separation model for separating a superimposed image was trained by using created 15000 sets as training data to build an image separation model for Example 1. The superimposed images of the remaining sets, which were used as data for checking, were separated by the image separation model for Example 1. The separated images and the partial images used for the superimposed images were compared to calculate PSNR and SSIM. PSNR and SSIM of the image separation model for Example 1 were 20.54 and 0.55, respectively.

Using each image in the same dataset in Example 1, part of each whole image was cut out, and the GB image components of one partial image were superimposed on the RGB image components of the other partial image. Sets of superimposed images were thus created. An image separation model for separating a superimposed image was trained by using created X1 sets as training data to build an image separation model for Example 2. The superimposed images of the remaining sets, which were used as data for checking, were separated by the image separation model for Example 2. The separated images and the partial images used for the superimposed images were compared to calculate PSNR and SSIM. PSNR and SSIM of the image separation model for Example 2 were 27.40 and 0.92, respectively.

Using each image in the same dataset in Example 1, part of each whole image was cut out. The luminance of one partial image was attenuated by using a brightness difference pattern in a checked pattern including squares corresponding to a field angle of 25°, and the resultant image was superimposed on the other partial image. Sets of superimposed image were thus created. Note that the attenuation ratio of one type of areas in the brightness difference pattern was 70%, and the attenuation ratio of the other type of areas was 30%. An image separation model for separating a superimposed image was trained by using created X1 sets as training data to build an image separation model for Example 3. The superimposed images of the remaining sets, which were used as data for checking, were separated by the image separation model for Example 3. The separated images and the partial images used for the superimposed images were compared to calculate PSNR and SSIM. PSNR and SSIM of the image separation model for Example 3 were 24.48 and 0.88, respectively.

Using each image in the same dataset in Example 1, part of each whole image was cut out. One partial image was distorted so as to reproduce the distortion aberration, and the resultant image was superimposed on the other partial image. Sets of superimposed images were thus created. An image separation model for separating a superimposed image was trained by using created 15000 sets as training data to build an image separation model for Example 4. The superimposed images of the remaining sets, which were used as data for checking, were separated by the image separation model for Example 4. The separated images and the partial images used for the superimposed images were compared to calculate PSNR and SSIM. PSNR and SSIM of the image separation model for Example 4 were 25.26 and 0.90, respectively.

In an embodiment, (1) an optical device includes:
an optical system configured to cause incident first light to focus on an specified area; and
an optical element configured to guide second light to the specified area, the second light having a principal ray that is incident on the optical system and angle between which and an optical axis of the optical system differs from angle between a principal ray of the first light and the optical axis of the optical system.

(2) In the optical device according to above (1),
the angle between the principal ray of the second light and the optical axis is larger than the angle between the principal ray of the first light and the optical axis.

(3) In the optical device according to above (1) or (2),
the optical element is a mirror configured to reflect the second light and guide the reflected second light to the specified area.

(4) An imaging device includes:
the optical device according to above (1) or (2); and
an imaging element including a light reception area overlapping the specified area.

(5) In the imaging device according to above (4),
the optical element is a mirror configured to reflect the second light and guide the reflected second light to the specified area.

(6) In the imaging device according to above (5),
a reflection surface of the mirror is parallel to the optical axis of the optical system.

(7) In the imaging device according to above (5) or (6),
the light reception area is rectangular, and a reflection surface of the mirror is parallel to one side of the rectangular light reception area of the imaging element.

(8) In the imaging device according to any one of above (5) to (7),
the mirror includes a plurality of plane mirrors, and
at least one set of two plane mirrors out of the plurality of plane mirrors includes reflection surfaces parallel to each other.

(9) In the imaging device according to above (8),
distance H between the optical axis of the imaging element and each of the reflection surfaces of the two plane mirrors parallel to each other is equal, and
CRA ≤ tan⁻¹(H/B) is satisfied, where CRA is angle of a principal ray of light flux from an object point at an angle of twice a direct field angle of the imaging optical system, the direct field angle matching the light reception area of the imaging element, and B is backfocus of the optical system.

(10) In the imaging device according to above (8) or (9),
each plane mirror is in close contact with an outer edge of the light reception area of the imaging element in a normal direction of the plane mirror.

(11) In the imaging device according to any one of above (5) to (10),
the mirror is located outside an exit pupil of the optical system as viewed in direction of the optical axis of the optical system.

(12) In the imaging device according to any one of above (5) to (11),
angle of a principal ray of any light flux in the optical system relative to the optical axis is larger than 0°.

(13) The imaging device according to any one of above (4) to (12), further includes
a controller configured to separate an image corresponding to an image signal generated by image capturing of the imaging element into first image components associated with object points within a direct field angle of the imaging optical system, the direct field angle matching the light reception area of the imaging element, and second image components associated with object points outside the direct field angle.

(14) In the imaging device according to any one of above (4) to (13),
the optical element performs optical processing on light flux incident on the optical element and emits resultant light flux.

(15) In the imaging device according to above (14),
the optical processing is changing bandwidth of the incident light flux.

(16) In the imaging device according to above (14),
the optical processing is adding, to the incident light flux, a brightness difference pattern according to incident position of the incident light flux.

(17) In the imaging device according to above (14),
the optical processing is adding distortion to an image to be formed by the incident light flux in the light reception area.

Although the embodiments of an imaging method using the imaging device 10, 100, or 101 have been described above, the embodiments of the present disclosure may have implementation aspects not only as a method or a program for implementing the device but also as a storage medium on which the program is stored (examples include an optical disk, a magneto-optical disk, a CD-ROM, a CD-R, a CD-RW, a magnetic tape, a hard disk, and a memory card).

The implementation aspect of the program is not limited to an application program such as object code compiled with a compiler or program code executed by an interpreter, and the implementation aspect may also be in the form of a program module or the like to be embedded into an operating system. The program need not be configured such that all the processes are executed only by a CPU on a control substrate. The program may be configured as necessary such that part or all of the program is executed by an expansion board added to a substrate or another processing unit mounted on a expansion unit.

The figures used for explaining the embodiments according to the present disclosure are schematic. The ratios of dimensions or the like on the drawings are not necessarily the same as those of actual devices.

Although the drawings and the examples are used above to describe the embodiments according to the present disclosure, it is important to note that those skilled in the art can make various variations and changes on the basis of the present disclosure. Hence, it is important to note that those variations and changes will be included in the scope of the present disclosure. For example, the functions and the like included in each component or the like can be rearranged unless doing so causes a logical contradiction. Two or more components or the like can be combined into one, or a component can be divided.

All the configuration requirements described in the present disclosure and/or all the disclosed methods or all the processing steps can be combined in any way, excluding combinations in which the features of these are mutually exclusive. Each of the features described in the present disclosure can be substituted with an alternative feature that operates for the same purpose, an equivalent purpose, or a similar purpose unless explicitly denied. Hence, unless explicitly denied, each of the disclosed features is merely an example of a comprehensive series of identical or equivalent features.

Further, the embodiments according to the present disclosure are not limited to any specific configuration of the embodiments described above. The embodiments according to the present disclosure can be expanded to all the new features described in the present disclosure or combinations of some of those, or all the described new methods or processing steps or combinations of some of those.

The terms "first", "second", and the like used in the present disclosure are identifiers to distinguish the components. For the components distinguished by being prefixed with "first", "second", and the like in the present disclosure, the ordinal numbers of the components can be exchanged. For example, for the first image components and the second image components, "first" and "second", which are identifiers, can be exchanged with each other. The identifiers are exchanged at the same time. Also after exchanging the identifiers, the components are distinguished. Identifiers may also be eliminated. The components without identifiers are distinguished with symbols. Only on the basis of identifiers such as "first" and "second" mentioned in the present disclosure, the order of the components cannot be interpreted, or the identifiers cannot be uses as a basis for the existence of an identifier with a smaller number.

### REFERENCE SIGNS

10, 100, 101 imaging device
11 imaging optical system
12, 121 imaging element
13, 130 optical element
14 controller
151 micro lens
161 pixel
171 first PD (photodiode)
181 second PD
190 first area
200 second area
21, 210, 211 optical device
22 first lens
23 prism
CRA angle of the principal ray of the light flux emitted from an object point at an angle of twice the direct field angle in the imaging optical system relative to the optical axis
im1 first image component
im1b first B image component
im1g first G image component
im1r first R image component
im2 second image component
im2b second B image component
im2g second G image component
olim superimposed image
ox optical axis
pa specified area
rcim restored image
pp object point at an angle twice the direct field angle
ra light reception area

## Claims

1. An optical device comprising:
an optical system configured to cause incident first light to focus on an specified area; and
an optical element configured to guide second light to the specified area, the second light having a principal ray that is incident on the optical system and angle between which and an optical axis of the optical system differs from angle between a principal ray of the first light and the optical axis of the optical system.

2. The optical device according to claim 1, wherein
the angle between the principal ray of the second light and the optical axis is larger than the angle between the principal ray of the first light and the optical axis.

3. The optical device according to claim 1 or 2, wherein
the optical element is a mirror configured to reflect the second light and guide the reflected second light to the specified area.

4. An imaging device comprising:
the optical device according to claim 1 or 2; and
an imaging element comprising a light reception area overlapping the specified area.

5. The imaging device according to claim 4, wherein
the optical element is a mirror configured to reflect the second light and guide the reflected second light to the specified area.

6. The imaging device according to claim 5, wherein
a reflection surface of the mirror is parallel to the optical axis of the optical system.

7. The imaging device according to claim 5 or 6, wherein
the light reception area is rectangular, and a reflection surface of the mirror is parallel to one side of the rectangular light reception area of the imaging element.

8. The imaging device according to any one of claims 5 to 7, wherein
the mirror comprises a plurality of plane mirrors, and
at least one set of two plane mirrors out of the plurality of plane mirrors comprises reflection surfaces parallel to each other.

9. The imaging device according to claim 8, wherein
distance H between the optical axis of the imaging element and each of the reflection surfaces of the two plane mirrors parallel to each other is equal, and
CRA ≤ tan⁻¹(H/B) is satisfied, where CRA is angle of a principal ray of light flux from an object point at an angle of twice a direct field angle of the imaging optical system, the direct field angle matching the light reception area of the imaging element, and B is backfocus of the optical system.

10. The imaging device according to claim 8 or 9, wherein
each plane mirror is in close contact with an outer edge of the light reception area of the imaging element in a normal direction of the plane mirror.

11. The imaging device according to any one of claims 5 to 10, wherein
the mirror is located outside an exit pupil of the optical system as viewed in direction of the optical axis of the optical system.

12. The imaging device according to any one of claims 5 to 11, wherein
angle of a principal ray of any light flux in the optical system relative to the optical axis is larger than 0°.

13. The imaging device according to any one of claims 4 to 12, further comprising
a controller configured to separate an image corresponding to an image signal generated by image capturing of the imaging element into first image components associated with object points within a direct field angle of the optical system, the direct field angle matching the light reception area of the imaging element, and second image components associated with object points outside the direct field angle.

14. The imaging device according to any one of claims 4 to 13, wherein
the optical element performs optical processing on light flux incident on the optical element and emits resultant light flux.

15. The imaging device according to claim 14, wherein
the optical processing is changing bandwidth of the incident light flux.

16. The imaging device according to claim 14, wherein
the optical processing is adding, to the incident light flux, a brightness difference pattern according to incident position of the incident light flux.

17. The imaging device according to claim 14, wherein
the optical processing is adding distortion to an image to be formed by the incident light flux in the light reception area.
